# EUROPÄISCHE PATENTSCHRIFT

(11) **EP 3 277 978 B1**
(45) Veröffentlichungstag und Bekanntmachung des Hinweises auf die Patenterteilung: **10.06.2020**
(21) Anmeldenummer: 16718201.3
(22) Anmeldetag: 23.03.2016
(51) Int. Cl.: F16G 15/04

(54) **KETTENSCHLOSS MIT SICHERUNGSELEMENT**
CHAIN LOCK HAVING A SECURING ELEMENT
JOINT DE CHAÎNE POURVU D'UN ÉLÉMENT DE SÛRETÉ

(30) Priorität: 31.03.2015 DE 202015101618 U
(43) Veröffentlichungstag der Anmeldung: 07.02.2018
(73) Patentinhaber: Thiele GmbH & Co. KG, 58640 Iserlohn (DE)
(72) Erfinder: BRODZIAK, Eugeniusz, 58640 Iserlohn (DE)
(74) Vertreter: Osterhoff, Utz
(86) Internationale Anmeldenummer: PCT/DE2016/100140
(87) Internationale Veröffentlichungsnummer: WO 2016/155704

(56) Entgegenhaltungen:
- EP-A2- 0 183 641
- DE-A1- 3 916 284
- DE-A1- 19 901 231
- DE-U1- 20 120 032
- GB-A- 2 116 288

## Beschreibung

Die vorliegende Erfindung betrifft ein Kettenschloss zur Verbindung von zwei Kettensträngen gemäß den Merkmalen im Oberbegriff von Anspruch 1.

Aus dem Stand der Technik ist es bekannt, zwei Kettenstränge mit Hilfe eines Kettenschlosses zu verbinden. Beispielsweise ist ein gattungsbildendes Kettenschloss aus der DE 10 2010 013 474 A1 und aus der DE3916284 bekannt. Hierzu werden zwei U-förmig ausgebildete Schlosshälften mit ihren jeweiligen Schenkeln in Querrichtung miteinander verriegelt. Dazu sind in den Schenkeln jeweils gegenüber den Schenkeln überstehende Zähne bzw. gegenüber den Schenkeln zurückversetzte Taschen ausgebildet, die in die Zähne bzw. Taschen der zweiten Schlosshälfte durch Ausführen einer Verriegelungsbewegung quer zur Längsrichtung des Kettenschlosses formschlüssig eingreifen. Damit nunmehr die zwei formschlüssig ineinandergreifenden U-förmigen Schlosshälften verriegelt bleiben, wird in einem mittleren Bereich ein Füllstück eingesetzt. Dies verhindert eine relative Bewegung der Schlosshälften zueinander entgegengesetzt der Verriegelungsrichtung und verhindert somit ein ungewolltes Lösen. Damit das Füllstück während des Betriebs in dem Kettenschloss gehalten bleibt, wird zusätzlich ein Fixierstift eingebracht.

Gerade beim Lösen des Kettenschlosses kann je nach Einbaulage diese Ausgestaltungsvariante mitunter nur mit erhöhtem Aufwand geöffnet werden.

Aufgabe der vorliegenden Erfindung ist es daher einen aus oben benannter Druckschrift bekanntes Kettenschloss derart weiterzubilden, das eine einfachere Versowie insbesondere Entriegelung gegeben ist.

Die zuvor genannte Aufgabe wird erfindungsgemäß mit einem Kettenschloss gemäß den Merkmalen im Anspruch 1 gelöst.

Vorteilhafte Ausgestaltungsvarianten der vorliegenden Erfindung sind in den abhängigen Ansprüchen beschrieben.

Demnach weist das Kettenschloss zur Verbindung von zwei Kettensträngen zwei U-förmige Schlosshälften auf, wobei die Schlosshälften formschlüssig ineinander steckbar sind. Auf den Schenkeln der U-Form ist eine Verzahnung ausgebildet, so dass die Schenkel einer Schlosshälfte mit den Schenkeln der anderen Schlosshälfte zur Anlage kommen und zwischen den Innenseiten der innenliegenden Schenkel ein Sicherungselement angeordnet ist. Erfindungsgemäß ist das Kettenschloss dadurch gekennzeichnet, dass das Sicherungselement aus zwei Sicherungsbausteinen ausgebildet ist, wobei je ein Sicherungsbaustein von einer Seite des Kettenschlosses in dieses eingesetzt ist und beide Sicherungsbausteine eine Gesamtlänge besitzen, die im Wesentlichen der Breite des Kettenschlosses entspricht. Ferner weist das Sicherungselement einen in den Sicherungsbausteinen angeordneten, diese formschlüssig verbindenden Sicherungsstift auf. Optional wird der Sicherungsstift durch einen innenliegenden Spannstift gesichert.

Der Vorteil der vorliegenden Erfindung besteht darin, dass der Sicherungsstift wahlweise zu je einer Seite ausgetrieben werden kann. Unabhängig von der Einbaulage bzw. der Lage des Kettenschlosses bei Demontage, beispielsweise in einer Förderrinne, kann somit der Sicherungsstift zu der für den anwendenden Monteur jeweils günstigeren Seite ausgetrieben werden. Mit Austreiben des Sicherungsstiftes wird gleichzeitig bevorzugt auch ein Sicherungsbaustein ausgetrieben, so dass der noch verbleibende Sicherungsbaustein dann zu der anderen Seite entnehmbar ist. Dadurch dass das Sicherungselement durch die zwei Sicherungsbausteine, welche sich jeweils hälftig von einer Seite bis etwa zur Mitte einer vertikalen Mittellängsebene des Kettenschlosses erstreckend ausgebildet ist, wird ein großflächiges Verformen, insbesondere plastisches Verformen, bzw. Festklemmen aufgrund des Betriebes des Kettenschlosses mit dem Sicherungselement vermieden. Die notwendige Kraft, insbesondere zum Entriegeln bzw. Lösen wird somit reduziert, was erhebliche Vorteile beim Entriegeln des Kettenschlosses mit sich bringt. Es ist bereits auch das Verriegeln des Kettenschlosses durch das beidseitige Einsetzen der Sicherungsbausteine vereinfacht. Weiterhin ist durch das formschlüssige Verbinden des Sicherungsstiftes, insbesondere in Form einer Clipverbindung bzw. Schnappverbindung, die Verriegelung bei Einsetzen beider Sicherungsbausteine unter Eingliederung des Sicherungsstiftes erledigt.

Insbesondere ist das Kettenschloss derart ausgebildet, dass die Schenkel einer Schlosshälfte zu einer horizontalen Mittellängsebene des Kettenschlosses einen schräg angeordneten Verlauf aufweisen. Hierzu ist insbesondere eine Außenanlagenseite eines Schenkels abgeschrägt, wobei die Innenanlagenseite des zweiten Schenkels der gleichen Schlosshälfte ebenfalls abgeschrägt ist, so dass bei zusammengesetztem Kettenschloss, aus beiden Schlosshälften, sich ein schräger Verlauf der Anlagenflächen mithin der Kontaktflächen beider Schlosshälften ergibt.

Zur Herstellung des formschlüssigen Eingriffs der jeweils an den Kontaktflächen anliegenden Schenkel ist ferner vorgesehen, dass an einem Schenkel, insbesondere an der schräg verlaufenden Außenanlagenseite des Schenkels, zu der horizontalen Mittellängsebene des Kettenschlosses quer abstehende Zähne ausgebildet sind und an einer Seite des anderen Schenkels, insbesondere an der Innenanlageseite des anderen Schenkels, gegenüber dieser Innenanlagenseite zurückversetzte Taschen ausgebildet sind. Beide Schlosshälften sind somit insbesondere als Gleichteile ausgebildet, wobei bei gegenüberliegendem Ineinandersetzen, mithin zeigen die Außenrundungen der U-Form in entgegengesetzte Richtungen, somit ein formschlüssiges Ineinanderstecken bzw. Verriegeln quer zur Mittellängsebene ermöglicht ist. Die Zähne einer Schlosshälfte greifen dann in die Taschen der zweiten Schlosshälfte ein sowie die Zähne der zweiten Schlosshälfte in die Taschen der ersten Schlosshälfte.

Damit nunmehr bei formschlüssig zusammengesetzten Schlosshälften eine Verriegelung erfolgen kann, ist jeweils an der Innenseite der innenliegenden Schenkel eine abgeflachte Aufnahmefläche ausgebildet. Die Sicherungsbausteine weisen an ihrer Außenmantelfläche ebenfalls, insbesondere an zwei gegenüberliegenden Seiten, eine abgeflachte Kontaktfläche auf, so dass die Aufnahmeflächen des jeweils innenliegenden Schenkels mit den Kontaktflächen des Sicherungsbausteins zur Anlage kommen.

Damit nunmehr die Sicherungsbausteine nicht in einer Richtung parallel zur Aufnahmefläche abscheren können, ist ferner vorgesehen, dass in der Aufnahmefläche ein Vorsprung ausgebildet ist, welcher gegenüber der Aufnahmefläche vorsteht. Insbesondere weist der Vorsprung eine Konfiguration als länglicher Steg auf und der Steg ist in Querrichtung des Kettenschloss sich erstreckend über einen Teil der Breite ausgebildet. Der Vorsprung ist ferner bevorzugt an seinen Enden abgerundet ausgebildet.

Die Sicherungsbausteine weisen an den Kontaktflächen eine gegenüber den Kontaktflächen zurückversetzte Nut auf. Bei in das Kettenschloss eingesetzten Sicherungsbausteinen greift der Vorsprung formschlüssig in die Nut ein und stellt somit eine formschlüssige Lagefixierung und damit lagefixierten Sitz der Sicherungsbausteine innerhalb des verriegelten Kettenschlosses sicher. Die Abrundung der Enden des Vorsprunges dient dabei der Eigenzentrierung beim Einsetzen der Sicherungsbausteine. Die Nut beider Sicherungsbausteine erstreckt sich in ihrer Längsrichtung auch nur über einen Teil der Breite des Kettenschlosses. Damit nunmehr die Sicherungsbausteine nicht quer zum Kettenschloss aus diesem herausfallen, ist ferner der Sicherungsstift als beidseitiger Federstift ausgebildet, welcher formschlüssig mittels einer Rastfunktion in den jeweiligen Sicherungsbaustein, insbesondere eine Ausnehmung in den Sicherungsbausteinen, eingreift. Der Sicherungsstift weist ferner einen Mittelbereich mit einem Stufenabsatz auf, sodass er nicht versehentlich durch einen Sicherungsbaustein hindurchgesteckt wird, sondern bei Erreichen einer maximalen Einstecktiefe formschlüssig an dem Stufenabsatz zur Anlage kommt. Die Ausnehmung durchgreift den Sicherungsbaustein insbesondere vollständig, so dass zum Entriegeln mit Hilfe eines Austreibers bzw. eines Dornes der Sicherungsstift zu der gegenüberliegenden Seite quer aus dem Kettenschloss zusammen mit dem auf dieser Seite befindlichen Sicherungsbaustein austreibbar ist. Der verbleibende Sicherungsbaustein kann dann zu der Seite entnommen werden, von welcher der Dorn bzw. Austreiber angesetzt wurde.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1, 2 und 3: ein erfindungsgemäßes Kettenschloss in Seitenansicht, Draufsicht sowie perspektivischer Ansicht mit eingesetztem Sicherungselement,
- Figur 4: eine Schlosshälfte in perspektivischer Ansicht,
- Figur 5: eine Schnittansicht gemäß Linie A-A aus Figur 1,
- Figur 6: eine Schnittansicht gemäß Linie B-B aus Figur 1,
- Figur 7a bis d: einen erfindungsgemäßen Sicherungsbaustein in verschiedenen Ansichten,
- Figur 8a bis d: ein zusammengesetztes Sicherungselement bestehend aus zwei Sicherungsbausteinen und einem Sicherungsstift in verschiedenen Ansichten und
- Figur 9a bis d: den erfindungsgemäßen Sicherungsstift in verschiedenen Ansichten.

In den Figuren werden für gleiche oder ähnliche Bauteile dieselben Bezugszeichen verwendet, auch wenn eine wiederholte Beschreibung aus Vereinfachungsgründen entfällt.

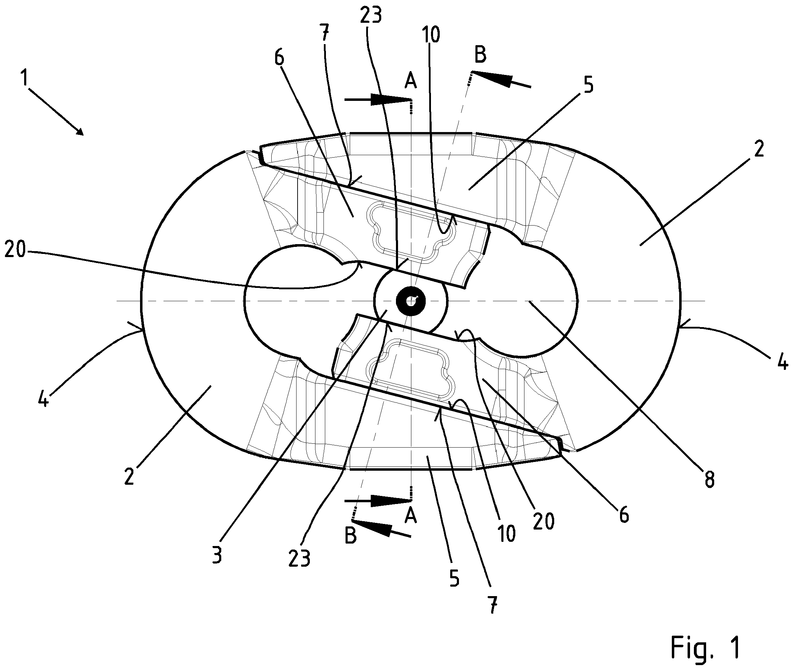

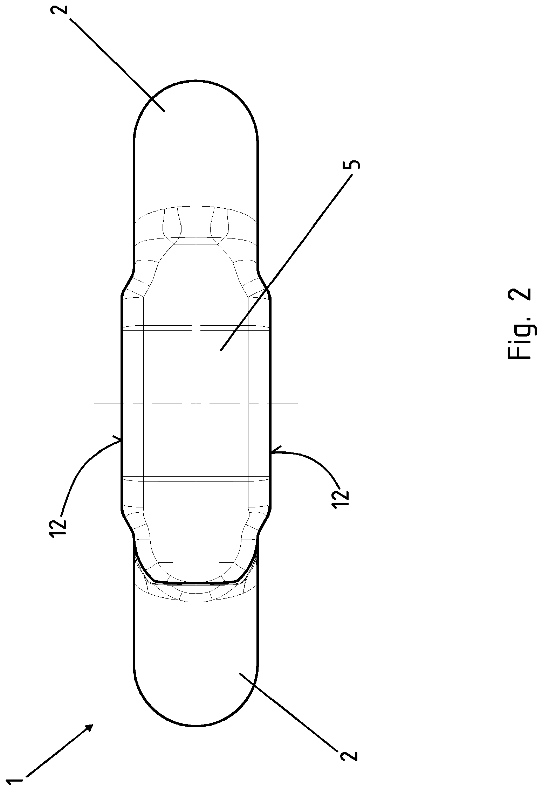

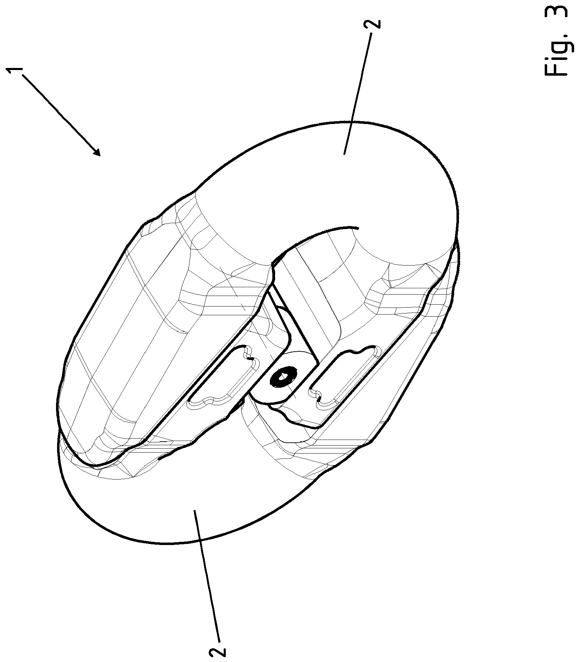

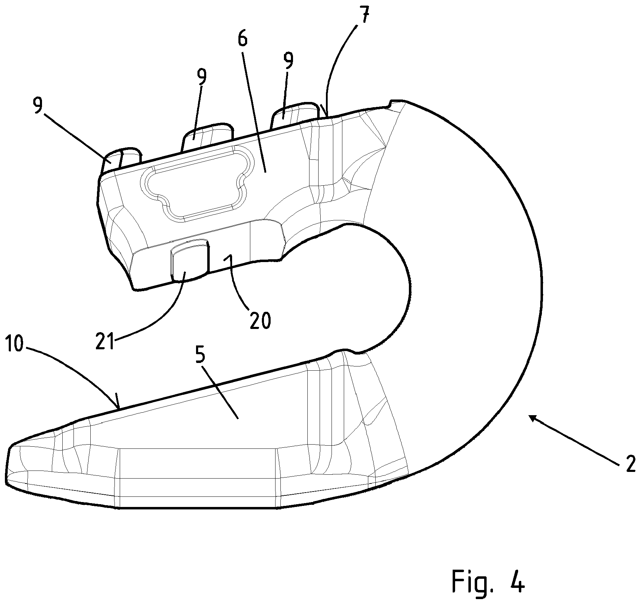

Figur 1, 2 und 3 zeigen ein erfindungsgemäßen Kettenschloss 1 in Seitenansicht, Draufsicht sowie perspektivischer Ansicht. Das Kettenschloss 1 weist dazu zwei Schlosshälften 2 auf, wobei jede Schlosshälfte 2 U-förmig ausgebildet ist. Im zusammengesetzten Zustand sind die Außenrundungen 4 der Schlosshälften 2 nach außen in entgegengesetzte Richtungen orientiert, so dass die Schenkel 5, 6 sich jeweils überlappen und formschlüssig miteinander verriegelt sind. Hierzu ist in Figur 4 gut ersichtlich, dass an dem Schenkel 6 eine Außenanlagenfläche 7 des Schenkels 6 zu einer Mittellängsebene 8 des Kettenschlosses 1 schräg verlaufend angeordnet ist. Gegenüber der Außenanlagenfläche 7 stehen Zähne 9 über, wobei die Zähne 9 im Wesentlichen quer zur horizontalen Mittellängsebene 8 orientiert gegenüber der Außenanlagenfläche 7 abstehend ausgebildet sind.

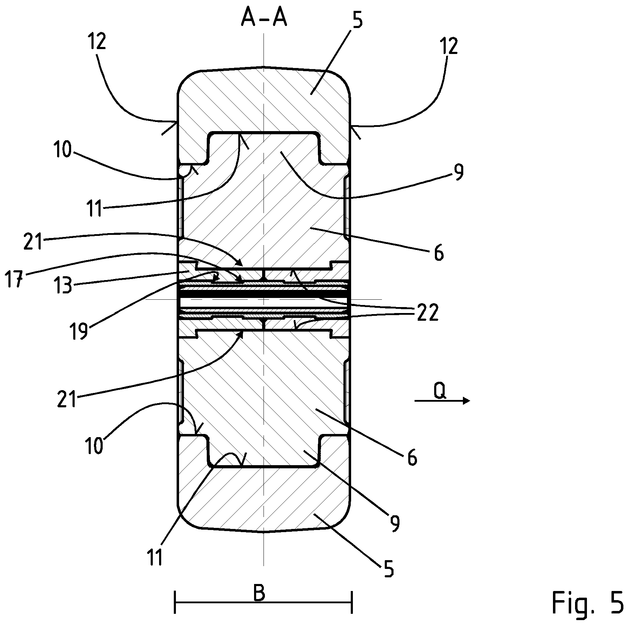

An einer Innenanlagenfläche 10 des anderen Schenkels 5 der jeweils gleichen Schlosshälfte 2, sind erkennbar in Figur 5, gegenüber dieser zurückversetzte Taschen 11 ausgebildet, in die die Zähne 9 formschlüssig eingreifen. Hierdurch wird das Kettenschloss 1 quer zur Mittellängsebene 8 formschlüssig durch Einstecken der Zähne 9 in die Taschen 11 durch formschlüssigen Anlagenkontakt der Anlagenflächen 4 verriegelt.

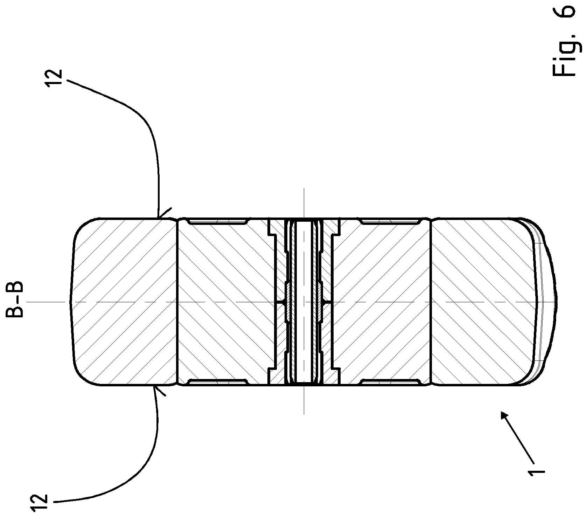

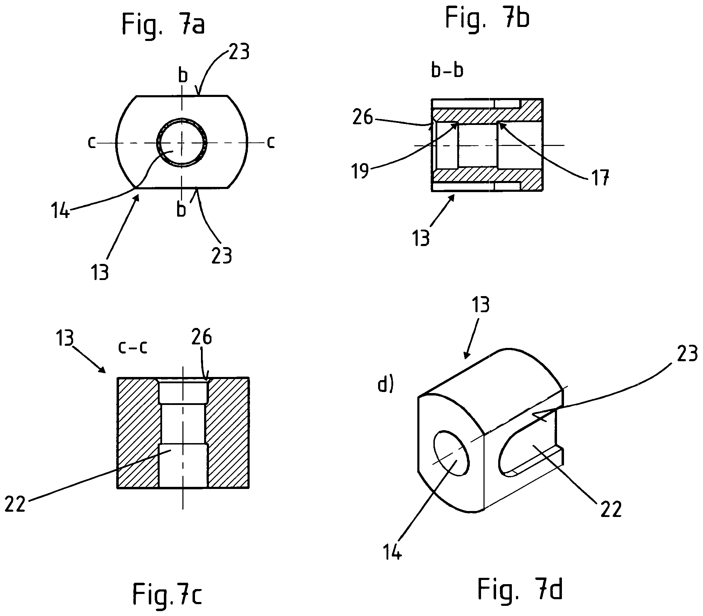

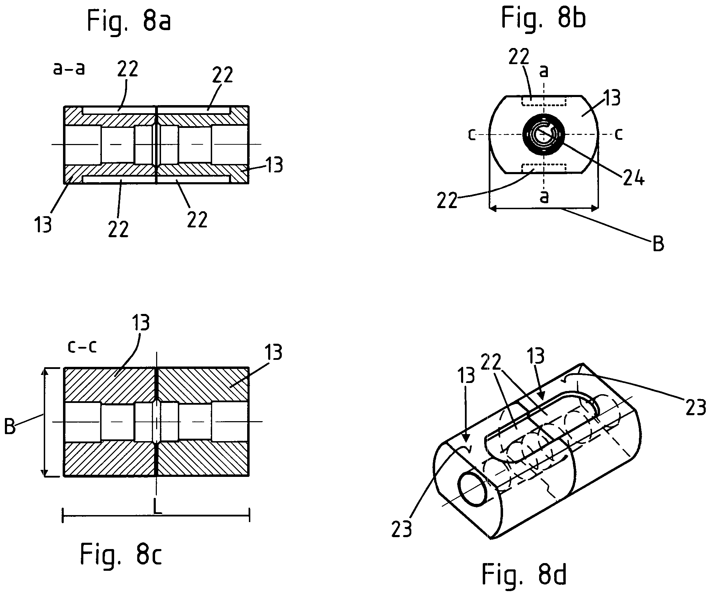

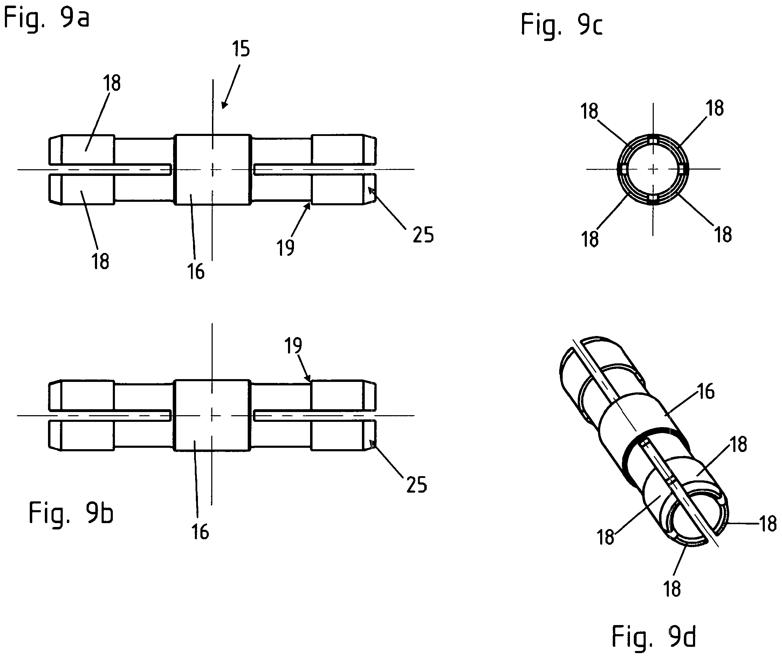

Damit diese Position lagefixiert gehalten bleibt, wird dann das Sicherungselement 3 von jeweils einer Seite des Kettenschlosses 1 in dieses eingesteckt. Das Sicherungselement 3 weist dazu gemäß Figuren 7 bis 9 gut ersichtlich zwei Sicherungsbausteine 13 auf, wobei jeder Sicherungsbaustein 13 gleich ausgebildet ist. In dem Sicherungsbaustein 13 ist eine diesen durchgreifende Ausnehmung 14 vorhanden, in die der in Figur 9 dargestellte Sicherungsstift 15 zum formschlüssigen Eingriff einsteckbar ist. Beide Sicherungsbausteine 13 weisen eine Länge L auf, die 90% bis 110%, insbesondere der Breite B des Kettenschlosses 1 entspricht Der Sicherungsstift 15 selbst weist dabei einen Stufenabsatz 16 auf, welcher an einem Innenabsatz 17 in der Ausnehmung 14 des Sicherungsbausteines 13 formschlüssig zur Anlage kommt, so dass ein versehentliches Durchtreiben des Sicherungsstiftes 15 durch den Sicherungsbaustein 13 vermieden ist. Ferner weist der Sicherungsstift 15 an jeder seiner Enden mindestens zwei bis maximal zwölf, bevorzugt vier Federzungen 18 auf, die sich bei Einführen in den Sicherungsbaustein 13 radial nach innen kontrahieren und dann bei vollständigem Einführen radial wiederum expandieren und einen Federzungenabsatz 19 in der Ausnehmung 14 des Sicherungsbausteines 13 formschlüssig hintergreifen. Im Rahmen der Erfindung müssen nicht zwingend vier Federzungen 18 auf jeder Seite des Sicherungsstiftes 15 angeordnet sein. Mindestens sind jedoch zwei Federzungen 18 angeordnet und maximal zwölf. Bevorzugt sind insbesondere drei bis fünf Federzungen 18 an jedem Ende 25 angeordnet, die sich dann radial kontrahieren und bei vollständigem Einführen wiederum radial expandieren. Die Sicherungsbausteine 13 sind somit von beiden Seiten insbesondere dargestellt in den Figuren 5 und 6 in das Kettenschloss 1 einsetzbar und werden in diesen gegen ein Verlieren in Richtung zu einer Seite 12 durch den Sicherungsstift 15 formschlüssig lagefixiert. Ferner in Figur 8b ersichtlich ist zum Verriegeln des Sicherungsstiftes 15 ein Spannstift 24 in diesen eingesetzt.

Weiterhin ist eine Aufnahmefläche 20 an der Innenseite des jeweils innenliegenden Schenkels 5, 6 vorgesehen, wobei gegenüber der Aufnahmefläche 20 ein länglicher sich in Querrichtung Q erstreckender Vorsprung 21 überstehend ausgebildet ist. Bei Einsetzen der Sicherungsbausteine 13 greift eine gegenüber einer Kontaktfläche 23 zurückversetzte Nut 22 des Sicherungsbausteines 13 formschlüssig ein und verhindert somit ein Abrutschen des Sicherungselementes 3 in eine Bewegungsrichtung parallel zur Aufnahmefläche 20. Ferner ersichtlich ist in Figur 9a und b, dass der Sicherungsstift 15 an jedem Ende ein umlaufend abgefastes Ende 25 und die Sicherungsbausteine, beispielsweise in Figur 7c und d gut ersichtlich, eine nach innen gerichtete Fase 26 aufweisen, so dass ein Einführen des Sicherungsstiftes 15 in den Sicherungsbaustein 13 erleichtert wird.

### Bezugszeichen:

- 1 -: Kettenschloss
- 2 -: Schlosshälfte
- 3 -: Sicherungselement
- 4 -: Außenrundung zu 2
- 5 -: Schenkel zu 2
- 6 -: Schenkel zu 2
- 7 -: Außenanlagefläche zu 6
- 8 -: Mittellängsebene zu 1
- 9 -: Zähne
- 10 -: Innenanlagenfläche zu 5
- 11 -: Tasche
- 12 -: Seite zu 1
- 13 -: Sicherungsbaustein
- 14 -: Ausnehmung zu 13
- 15 -: Sicherungsstift
- 16 -: Stufenabsatz
- 17 -: Innenabsatz
- 18 -: Federzunge
- 19 -: Federzungenabsatz
- 20 -: Aufnahmefläche
- 21 -: Vorsprung
- 22 -: Nut
- 23 -: Kontaktfläche zu 13
- 24 -: Spannstift
- 25 -: abgefastes Ende
- 26 -: Fase

- B -: Breite
- L -: Länge
- Q-: Querrichtung

## Patentansprüche

1. Kettenschloss (1) zur Verbindung von zwei Kettensträngen, aufweisend zwei U-förmige Schlosshälften (2), die formschlüssig ineinander steckbar sind, wobei auf den Schenkeln (5, 6) der U-Form eine Verzahnung ausgebildet ist, so dass die Schlosshälften (2) quer zur Längsrichtung des Kettenschlosses (1) zur Verriegelung ineinander gesteckt sind, so dass die Schenkel (5, 6) einer Schlosshälfte (2) mit den Schenkeln (5, 6) der anderen Schlosshälfte (2) zur Anlage kommen und zwischen den Innenseiten der innenliegenden Schenkel (5, 6) ein Sicherungselement (3) angeordnet ist, wobei das Sicherungselement (3) aus zwei Sicherungsbausteinen (13) ausgebildet ist, wobei je ein Sicherungsbaustein (13) von einer Seite des Kettenschlosses (1) eingesetzt ist und beide Sicherungsbausteine (13) eine Gesamtlänge (L) besitzen, die im Wesentlichen der Breite (B) des Kettenschlosses (1) entspricht und einem in den Sicherungsbausteinen (13) angeordneten, diese formschlüssig verbindenden Sicherungsstift (15), **dadurch gekennzeichnet, dass** an der Innenseite der innen liegenden Schenkel (6) eine abgeflachte Aufnahmefläche (20) zur Aufnahme der Sicherungsbausteine (13) ausgebildet ist und in der Aufnahmefläche (20) ein Vorsprung (21) ausbebildet ist, der sich in Querrichtung (Q) des Kettenschlosses (1) erstreckt und dass jeder Sicherungsbaustein (13) auf zwei gegenüberliegenden Seiten eine abgeflachte Kontaktfläche (23) aufweist, wobei in der Kontaktfläche (23) eine gegenüber dieser zurückversetzte Nut (22) ausgebildet ist und sich die Nut (22) in Querrichtung (Q) des Kettenschlosses (1) erstreckt, wobei der Vorsprung (21) nach Art einer Führungsschiene formschlüssig in die Nuten (22) der Sicherungsbausteine (13) bei zusammengesetztem und verriegeltem Kettenschloss (1) eingreift.

2. Kettenschloss nach Anspruch 1, **dadurch gekennzeichnet, dass** die Schenkel (5, 6) einer Schlosshälfte (2) zu einer Mittellängsebene (8) des Kettenschlosses (1) einen schräg angeordneten Verlauf aufweisen, wobei insbesondere eine Außenanlagenseite eines Schenkels (5, 6) abgeschrägt ist und die Innenanlagenseite des zweiten Schenkels (5, 6) der gleichen Schlosshälfte (2) abgeschrägt - ist, so dass bei zusammengesetztem Kettenschloss (1) ein schräger Verlauf der Anlageflächen beider Schlosshälften (2) ausgebildet ist.

3. Kettenschloss nach Anspruch 2, **dadurch gekennzeichnet, dass** an der Außenanlagenfläche (7) des Schenkels (6) zu der Mittellängsebene (8) des Kettenschlosses (1) quer abstehende Zähne (9) ausgebildet sind und an der Innenanlagenfläche (10) des anderen Schenkels (5) gegenüber dieser zurück versetzte Taschen (11) ausgebildet sind.

4. Kettenschloss nach einem der Ansprüche 1 bis 3, **dadurch gekennzeichnet, dass** der Vorsprung (21) als länglicher Steg ausgebildet ist und an seinen Enden abgerundet ausgebildet ist.

5. Kettenschloss nach einem der vorhergehenden Ansprüche, **dadurch gekennzeichnet, dass** der Sicherungsstift (15) in einem Mittelbereich einen Stufenabsatz (16) aufweist.

6. Kettenschloss nach einem der vorhergehenden Ansprüche, **dadurch gekennzeichnet, dass** in dem Sicherungsstift (15) ein Spannstift (24) angeordnet ist.

## Claims

1. Chain lock (1) for connecting two chain strands, having two U-shaped lock halves (2), which can be inserted into one another in a form-fitting manner, wherein a toothing is formed on the legs (5, 6) of the U shape, so that the lock halves (2) are inserted into one another for locking perpendicular to the longitudinal direction of the chain lock (1), so that the legs (5, 6) of one lock half (2) come into contact with the legs (5, 6) of the other lock half (2) and a securing element (3) is arranged between the inner sides of the inner legs (5, 6), wherein the securing element (3) is formed by two securing blocks (13), wherein each securing block (13) is inserted from one side of the chain lock (1) and both securing blocks (13) have a total length (L), which corresponds essentially to the width (B) of the chain lock (1) and securing pin (15) arranged in the securing blocks (13) connecting the latter in a form-fitting manner, **characterised in that** on the inside of the inner legs (6) a flattened mounting surface (20) for mounting the securing blocks (13) is formed and in the mounting surface (20) a projection (21) is formed which extends in transverse direction (Q) of the chain lock (1), and **in that** each securing block (13) has a flattened contact surface (23) on two opposite sides, wherein in the contact surface (23) a groove (22) is formed which is recessed opposite the latter and the groove (22) extends in transverse direction (Q) of the chain lock (1), wherein the projection (21) engages in the manner of a guide rail in a form-fitting manner into the grooves (22) of the securing blocks (13) with an assembled and locked chain lock (1).

2. Chain lock according to claim 1, **characterised in that** the legs (5, 6) of one lock half (2) run in an oblique direction relative to a central longitudinal plane (8) of the chain lock (1), wherein in particular an outer contact side of a leg (5, 6) is chamfered and the inner contact side of the second leg (5, 6) of the same lock half (2) is chamfered so that with an assembled chain lock (1) the contact surfaces of both lock halves (2) have an oblique direction.

3. Chain lock according to claim 2, **characterised in that** on the outer contact surface (7) of the leg (6) teeth (9) are formed which protrude perpendicularly to the central longitudinal plane (8) of the chain lock (1) and on the inner contact surface (10) of the other leg (5) pockets (11) are formed which are recessed opposite the latter.

4. Chain lock according to any of claims 1 to 3, **characterised in that** the projection (21) is designed as an elongated cross-piece and is designed to be rounded at its ends.

5. Chain lock according to any of the preceding claims, **characterised in that** the securing pin (15) has a stepped shoulder (16) in a central section.

6. Chain lock according to any of the preceding claims, **characterised in that** a clamping pin (24) is arranged in the securing pin (15).

## Revendications

1. Joint de chaîne (1) destiné à relier deux brins de chaîne, comportant deux moitiés de serrure en forme de U (2) qui peuvent être emboîtées l'une dans l'autre par complémentarité de forme, une denture étant formée sur les branches (5, 6) de la forme en U, de sorte que les moitiés de serrure (2) sont emboîtées l'une dans l'autre pour le verrouillage transversalement à la direction longitudinale du joint de chaîne (1), de sorte que les branches (5, 6) d'une moitié de serrure (2) entrent en contact avec les branches (5, 6) de l'autre moitié de serrure (2) et un élément de sûreté (3) est disposé entre les côtés intérieurs des branches intérieures (5, 6), l'élément de sûreté (3) étant formé de deux blocs de sûreté (13), un bloc de sûreté (13) étant inséré d'un côté du joint de chaîne (1) et les deux blocs de sûreté (13) ayant une longueur totale (L) qui correspond essentiellement à la largeur (B) du joint de chaîne (1), et une broche de sûreté (15) étant disposé dans les blocs de sûreté (13), les reliant par complémentarité de forme, **caractérisée en ce qu'**une surface de réception aplatie (20) destinée à recevoir les blocs de sûreté (13) est formée sur le côté intérieur des branches intérieures (6) et une saillie (21) est formée dans la surface de réception (20), qui s'étend dans la direction transversale (Q) du joint de chaîne (1), et **en ce que** chaque bloc de sûreté (13) présente une surface de contact aplatie (23) sur deux côtés opposés, une gorge (22) étant formée dans la surface de contact (23), qui est en retrait par rapport à celle-ci, et la gorge (22) s'étend dans la direction transversale (Q) du joint de chaîne (1), la saillie (21) s'engageant à la manière d'un rail de guidage par complémentarité de forme dans les gorges (22) des blocs de sûreté (13) lorsque le joint de chaîne (1) est assemblé et verrouillé.

2. Joint de chaîne selon la revendication 1, **caractérisé en ce que** les branches (5, 6) d'une moitié de serrure (2) présentent un tracé oblique par rapport à un plan longitudinal médian (8) du joint de chaîne (1), en particulier une face de contact extérieure d'une branche (5, 6) étant biseautée et la face de contact intérieure de la deuxième branche (5, 6) de la même moitié de serrure (2) étant biseautée, de sorte que lorsque le joint de chaîne (1) est assemblé, un tracé oblique des surfaces de contact des deux moitiés de serrure (2) est formé.

3. Joint de chaîne selon la revendication 2, **caractérisé en ce que** des dents (9) sont formées en saillie transversalement au plan longitudinal médian (8) du joint de chaîne (1) sur la surface de contact extérieure (7) de la branche (6), et des poches (11) sont formées sur la surface de contact intérieure (10) de l'autre branche (5), en retrait par rapport à celle-ci.

4. Joint de chaîne selon l'une quelconque des revendications 1 à 3, **caractérisé en ce que** la saillie (21) est formée en tant que traverse allongée et est arrondie à ses extrémités.

5. Joint de chaîne selon l'une quelconque des revendications précédentes, **caractérisé en ce que** la broche de sûreté (15) présente un épaulement de palier (16) dans une zone centrale.

6. Joint de chaîne selon l'une quelconque des revendications précédentes, **caractérisé en ce qu'**une goupille de serrage (24) est disposée dans la broche de sûreté (15).
